Europäisches Patentamt

(19) European Patent Office

Office européen des brevets

(11) Publication number: **0 084 454**
**A2**

# (12) EUROPEAN PATENT APPLICATION

(21) Application number: 83300232.2

(51) Int. Cl.³: **G 06 F 3/023**

(22) Date of filing: 18.01.83

(30) Priority: 19.01.82 US 340699

(43) Date of publication of application:
27.07.83 Bulletin 83/30

(84) Designated Contracting States:
DE FR GB IT SE

(71) Applicant: GRUMMAN AEROSPACE CORPORATION
South Oyster Bay Road
Bethpage, NY 11714(US)

(72) Inventor: Walz, George A.
172 Woodland Drive
East Islip New York 11730(US)

(72) Inventor: Kump, Donald H.
16 Orton Drive
East Northport New York 11731(US)

(74) Representative: Boon, Graham Anthony et al,
Elkington and Fife High Holborn House 52/54 High
Holborn
London, WC1V 6SH(GB)

(54) Keybord terminal.

(57) A keyboard terminal (100) for entering test programs
written in an English-format computer programming language into computerized automatic test systems. In re-
sponse to the activation of selected user-activated keys
associated with a programmable keyboard, a preprogram-
med microprocessor control system (200) generates word
character strings corresponding to the words of a predeter-
mined test programming language, thereby allowing single
keystroke entry of test program words into a control
computer (300) associated with the automatic test system.

Fig.1

EP 0 084 454 A2

Croydon Printing Company Ltd

KEYBOARD TERMINAL

This invention relates to the field of automatic test equipment, and more particularly to a keyboard terminal for entering test programs into computerized automatic test equipment (ATE).

Typically, sophisticated ATE configured as an automatic test station finds wide application in the avionics instrumentation field. Examples of such ATE are found in the computerized automatic testers (CAT-series) sold by Grumman Aerospace Corporation. Automatic testing of the various electronic systems and subsystems of an aircraft may be readily conducted by means of such automatic test equipment in conjunction with user-generated test programs.

ATLAS is a high level computer programming language intended specifically for automatic test programming. It is at this time becoming standard, on an industry-wide basis, and is likely to be used as the source for the great majority of test programs developed over the next several years.

As a programming language, ATLAS is characterized by the use of common English words and grammar. For this reason, it requires more characters per instruction, as compared with other, older mathematical format test languages. Accordingly, more time and effort are required of programmers and test engineers who use the ATLAS language. In addition, test programs written in the ATLAS language often contain errors introduced by the normally lengthy typing process. Accordingly, conventional keyboard terminals for entering test programs written in an English-format computer programming language, such as ATLAS, are afflicted with the same drawbacks and limitations.

An optimal keyboard for entering test programs written in an English-format computer programming language into computerized automatic test systems should have several basic capabilities. First, it should reduce the physical time and effort required to enter program words into the system. Second, it should be relatively error-free. And finally, it should have the capability to generate an entire word of the programming language in response to relatively few keystroke entries.

It is accordingly an objection of the present invention to overcome the aforementioned limitations and drawbacks and to provide a keyboard terminal for entering test program words into computerized automatic test systems having the desirable attributes noted above.

It is an object of an embodiment of the present invention to provide an ATLAS language keyboard terminal.

According to the present invention, there is provided a keyboard terminal comprising: keyboard means including a plurality of user-activated test language keys; and preprogrammed means operatively connected and responsive to said plurality of user-activated test language keys for generating a corresponding plurality of word character strings, wherein each of said word character strings represents a unique word of a predetermined test programming language.

The preprogrammed means preferably also includes means for transferring the generated word character strings to a control computer.

An embodiment of the present invention will now be described by way of example with reference to the accompanying drawings, in which:

FIGURE 1 is a block diagram of the keyboard terminal, in accordance with an embodiment of the present invention; and

FIGURES 2 A and B illustrate the character assignment and the corresponding test language keys, respectively, for the keyboard utilized in the terminal illustrated in FIGURE 1.

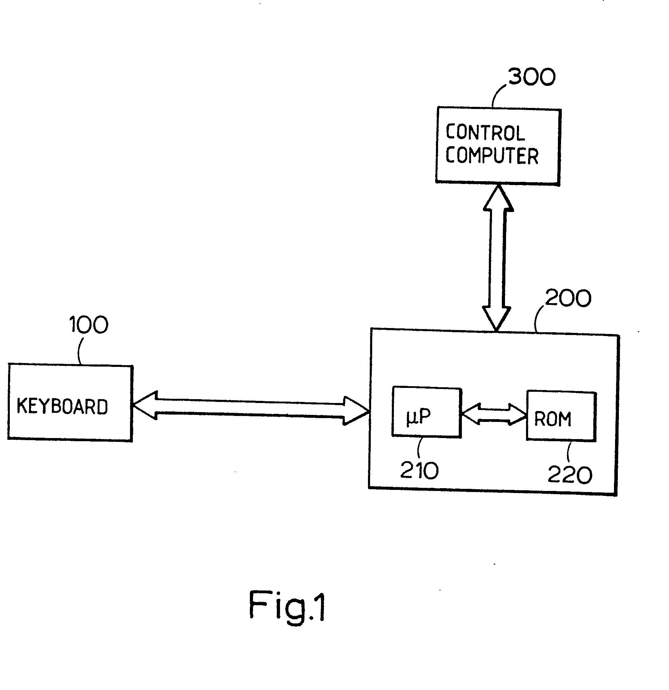

A block diagram of an embodiment of the keyboard terminal of the present invention is illustrated in FIGURE 1. As shown therein, the keyboard terminal includes a standard programmable keyboard 100 and a microprocessor control system 200. The programmable keyboard 100, such as, for example, the MicroSwitch Model 103SD30-2 Intelligent Keyboard with 128 key option, has been modified to contain a plurality of definable keys for initiating single key activation of the unique keywords used in composing a predetermined English-format test program. For example, in the case of the ATLAS test programming language, keyboard 100 would have more than seventy definable keys, each corresponding to a unique ATLAS keyword.

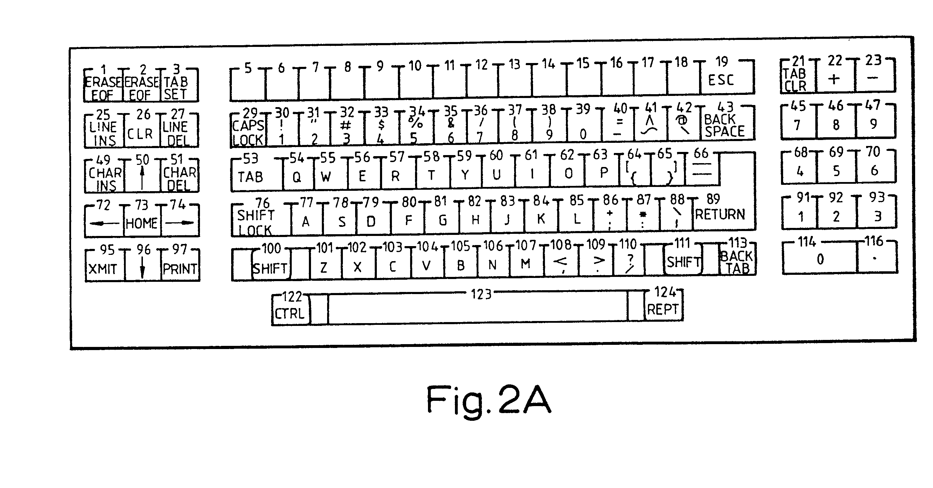

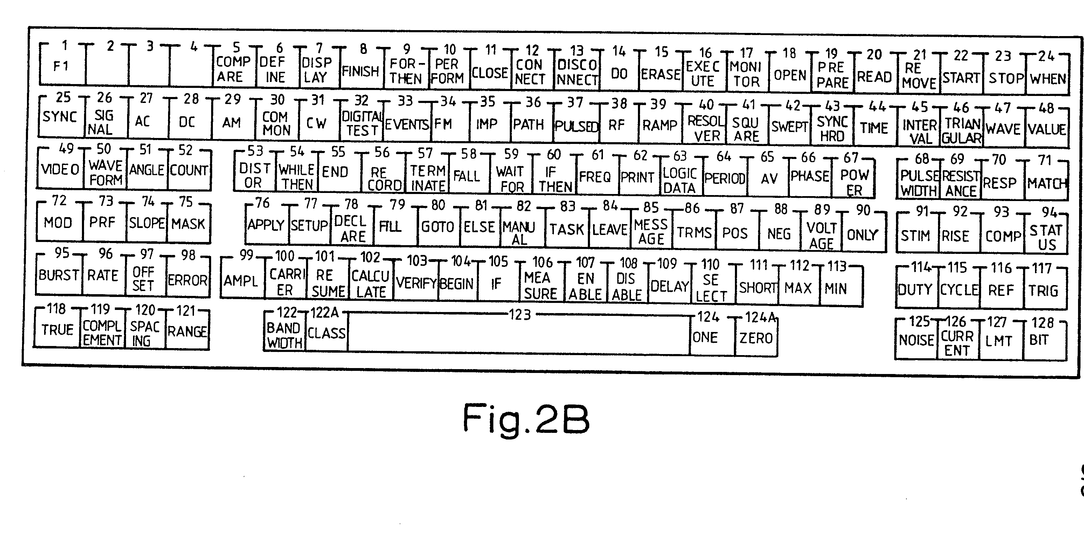

The correspondence between the character assignment and the corresponding ATLAS test language keys for the MicroSwitch keyboard is illustrated in FIGURES 2 A and B. Comparing the character assignment illustrated in FIGURE 2A with the test language keys illustrated in FIGURE 2B, it is noted that the upper left test language key Fl is utilized by the user to change from the conventional keyboard illustrated in FIGURE 2A to the test language keyboard illustrated in FIGURE 2B. More specifically, depressing the Fl key allows the user to switch from typewriter letter format to the ATLAS language keyboard.

A microprocessor control system 200 including a microprocessor 210, such as, for example, Intel 8080, and an associated read-only-memory (ROM) 220, such as, for example, Intel 8ZS115, is preprogrammed to generate an appropriate word character string for each of the test language keywords upon activation of the corresponding key on keyboard 100.

The operation of the microprocessor control system 200 is as follows. A keystroke generates an interrupt to microprocessor 210 causing it to read its input-output port and obtain the numerical code generated as a result of the keystroke. The numerical code is used as a pointer to a table in ROM 220 which allows a routine in microprocessor 210 to fetch the appropriate ASCII string that represents the ATLAS keyword unique to the key on keyboard 100 that was activated. The ASCII word character string is then transferred via conventional means (not shown), such as, for example, an IEEE-488-(1975) bus compatible interface network to a control computer 300 associated with an automatic test system (not shown).

To facilitate understanding of the operation of the keyboard terminal of the present invention, an illustrative example may be helpful. Using the ATLAS verb "MEASURE" as an example, the following sequence of operations illustrates how the keyboard terminal is used to generate an entire word from a single keystroke. If the keyboard 100 is not in the test language mode, the user first depresses the F1 key to place it in that mode.

To enter the test word "MEASURE" the user interacts with keyboard 100 which contains a number of definable keys corresponding to the number of test words in the ATLAS language. Pressing the key on keyboard 100 corresponding to the test word "MEASURE" causes a signal to be generated and transmitted to the microprocessor control system 200. Upon receipt of the signal generated by the activation of the "MEASURE" key, the preprogrammed microprocessor 210 causes the ASCII characters corresponding to the ATLAS test word "MEASURE" stored in ROM 220 to be read out of the memory and the word character string to be transferred to the control computer 300.

In a like manner, other keys on keyboard 100 are programmed to generate other ATLAS words, such as "VERIFY", "VOLTAGE", etc. so that the user can construct complete ATLAS statements made up of combinations of automatically generated ATLAS words and conventionally typed punctuation and characters.

CLAIMS

    1. A keyboard terminal comprising: keyboard means (100) including a plurality of user-activated test language keys; and preprogrammed means (200) operatively connected and responsive to said plurality of user-activated test language keys for generating a corresponding plurality of word character strings, wherein each of said word character strings represents a unique word of a predetermined test programming language.

    2. A keyboard terminal as claimed in Claim 1, wherein said preprogrammed means (200) include microprocessor control means (210).

    3. A keyboard terminal as claimed in Claim 1 or 2, wherein said preprogrammed means further include means for transferring said word character strings to a control computer (300).

    4. An ATLAS language keyboard terminal comprising: programmable keyboard means (100) including a plurality of user-activated keys; and preprogrammed microprocessor control means (200) operatively connected and responsive to said plurality of user-activated keys for generating a corresponding plurality of word character strings wherein each of said word character strings represents a unique word of the ATLAS test programming language.

    5. An ATLAS language keyboard terminal as claimed in Claim 4, including means for transferring said word character strings to a control computer (300).

Fig.1

| 1 ERASE EOF | 2 ERASE EOF | 3 TAB SET |

| 5 | 6 | 7 | 8 | 9 | 10 | 11 | 12 | 13 | 14 | 15 | 16 | 17 | 18 | 19 ESC |

| 21 TAB CLR | 22 + | 23 − |

| 25 LINE INS | 26 CLR | 27 LINE DEL |

| 29 CAPS LOCK | 30 ! 1 | 31 " 2 | 32 # 3 | 33 $ 4 | 34 % 5 | 35 & 6 | 36 / 7 | 37 ( 8 | 38 ) 9 | 39 0 | 40 = − | 41 ∧ ∨ | 42 @ | 43 BACK SPACE |

| 45 7 | 46 8 | 47 9 |

| 49 CHAR INS | 50 ↑ | 51 CHAR DEL |

| 53 TAB | 54 Q | 55 W | 56 E | 57 R | 58 T | 59 Y | 60 U | 61 I | 62 O | 63 P | 64 [ { | 65 ] } | 66 |

| 68 4 | 69 5 | 70 6 |

| 72 ← | 73 HOME | 74 → |

| 76 SHIFT LOCK | 77 A | 78 S | 79 D | 80 F | 81 G | 82 H | 83 J | 84 K | 85 L | 86 + ; | 87 * : | 88 \ ' | 89 RETURN |

| 91 1 | 92 2 | 93 3 |

| 95 XMIT | 96 ↓ | 97 PRINT |

| 100 SHIFT | 101 Z | 102 X | 103 C | 104 V | 105 B | 106 N | 107 M | 108 < , | 109 > . | 110 ? / | 111 SHIFT | 113 BACK TAB |

| 114 0 | 116 . |

| 122 CTRL | 123 | 124 REPT |

# Fig. 2A

Fig.2B

| 1 F1 | 2 | 3 | 4 | 5 COMPARE | 6 DEFINE | 7 DISPLAY | 8 FINISH | 9 FOR-THEN | 10 PERFORM | 11 CLOSE | 12 CONNECT | 13 DISCONNECT | 14 DO | 15 ERASE | 16 EXECUTE | 17 MONITOR | 18 OPEN | 19 PREPARE | 20 READ | 21 REMOVE | 22 START | 23 STOP | 24 WHEN |
| 25 SYNC | 26 SIGNAL | 27 AC | 28 DC | 29 AM | 30 COMMON | 31 CW | 32 DIGITAL TEST | 33 EVENTS | 34 FM | 35 IMP | 36 PATH | 37 PULSED | 38 RF | 39 RAMP | 40 RESOLVER | 41 SQUARE | 42 SWEPT | 43 SYNC HRD | 44 TIME | 45 INTERVAL | 46 TRIANGULAR | 47 WAVE | 48 VALUE |
| 49 VIDEO | 50 WAVEFORM | 51 ANGLE | 52 COUNT | 53 DISTOR | 54 WHILE THEN | 55 END | 56 RECORD | 57 TERMINATE | 58 FALL | 59 WAIT FOR | 60 IF THEN | 61 FREQ | 62 PRINT | 63 LOGIC DATA | 64 PERIOD | 65 AV | 66 PHASE | 67 POWER | 68 PULSE WIDTH | 69 RESISTANCE | 70 RESP | 71 MATCH |
| 72 MOD | 73 PRF | 74 SLOPE | 75 MASK | 76 APPLY | 77 SETUP | 78 DECLARE | 79 FILL | 80 GOTO | 81 ELSE | 82 MANUAL | 83 TASK | 84 LEAVE | 85 MESSAGE | 86 TRMS | 87 POS | 88 NEG | 89 VOLTAGE | 90 ONLY | 91 STIM | 92 RISE | 93 COMP | 94 STATUS |
| 95 BURST | 96 RATE | 97 OFFSET | 98 ERROR | 99 AMPL | 100 CARRIER | 101 RESUME | 102 CALCULATE | 103 VERIFY | 104 BEGIN | 105 IF | 106 MEASURE | 107 ENABLE | 108 DISABLE | 109 DELAY | 110 SELECT | 111 SHORT | 112 MAX | 113 MIN | 114 DUTY | 115 CYCLE | 116 REF | 117 TRIG |
| 118 TRUE | 119 COMPLEMENT | 120 SPACING | 121 RANGE | 122 BANDWIDTH | 122A CLASS | 123 | 124 ONE | 124A ZERO | 125 NOISE | 126 CURRENT | 127 LMT | 128 BIT |

0084454

3/3